# EUROPÄISCHE PATENTSCHRIFT

(11) **EP 4 119 425 B1**
(45) Veröffentlichungstag und Bekanntmachung des Hinweises auf die Patenterteilung: **05.11.2025**
(21) Anmeldenummer: 22184295.8
(22) Anmeldetag: 12.07.2022
(51) Int. Cl.: B62D 51/00, A01F 1/00, B62D 21/00, B62D 67/00, A01D 34/08, A01D 34/62, A01D 34/82, B62D 51/06

(54) **TELESKOPIERBARER LENKHOLM FÜR EINACHSSCHLEPPER**
TELESCOPIC STEERING MEMBER FOR A SINGLE AXLE TRACTOR
MANCHERON TÉLESCOPIQUE POUR MOTOCULTEURS

(30) Priorität: 15.07.2021 DE 102021118363
(43) Veröffentlichungstag der Anmeldung: 18.01.2023
(73) Patentinhaber: Rapid Technic GmbH, 88693 Deggenhausertal/Mennwangen (DE)
(72) Erfinder: Roth, Thomas, 88263 Horgenzell (DE)
(74) Vertreter: Patentanwälte und Rechtsanwalt Weiß, Arat & Partner mbB

(56) Entgegenhaltungen:
- DE-B- 1 087 391
- JP-A- 2002 165 509
- JP-A- 2006 006 148
- JP-A- 2013 001 251
- US-A1- 2020 146 213

## Beschreibung

### Technisches Gebiet

Die Erfindung betrifft einen teleskopierbaren Lenkholm für Einachsschlepper nach dem Oberbegriff des Anspruchs 1.

### Stand der Technik

Variabel einstellbare Lenkvorrichtungen für Einachsschlepper sind bereits in vielfältiger Form und Ausgestaltung bekannt und gebräuchlich.

In diesem Zusammenhang wird auf die JP 2002 165 509 A hingewiesen, welche ebenfalls ein teleskopierbaren Lenkkolben für einen Abschlepper mit einem inneren Holm und einem äußeren Holm, sowie ein Fixierungswerkzeug offenbart, bei der innere Holm und der äußere Holm stufenlos teleskopierbar bei der Anschlagvorrichtung verbunden sind.

In gleicher Weise wird auf die JP 2013 00125 hingewiesen, welche eine ähnliche Konstruktion zeigt. Auch die JP 2006 006 148 A zeigt eine ähnliche Konstruktion, wobei der Anschlag in die eine Richtung durch eine Biegung gegeben ist. Weiter zeigt die US 2020/146 213 A1 ebenfalls eine entsprechende teleskopierbare Lenkstange, welche stufenlos telekopierbar und dann in bestimmten Löchern beliebig beabstandet zueinander festgelegt werden kann.

So wird beispielsweise in der DE 162 55 03 U ein in der Länge verstellbarer U-förmiger Lenker für einen Einachsschlepper offenbart, welcher über Klemmschrauben in einer gewünschten Stellung zu einem Lenkerhalter festlegbar ist. Die U-Form bildet einerseits den Lenkerteil mit Handgriffen und andererseits jeweils zwei freie Enden, welche eine eingefahrene Position des Lenkers dadurch ermöglichen, dass sie beidseits an einem Getriebegehäuse eines Einachsschleppers vorbeigeschoben werden können.

Weiterhin ist in diesem Zusammenhang die US 8,839,692 B2 "Walk-behind tiller with adjustable handle mechanism" zu nennen. Dort wird ein verstellbarer Griffmechanismus offenbart, welcher aus einem U-förmigen Rohr besteht, welches mit seinen freien Enden weitere Rohre aufnimmt. Diese weiteren Rohre können über eine Schiebeschaltvorrichtung, die zwischen den beiden freien Enden des U-förmigen Rohrs angeordnet ist, in ihrer Einschubtiefe an unterschiedlichen Positionen über jeweilige Bohrungen variabel positioniert werden.

Ferner ist die DE W 3696 "Einachsschlepper mit Lenkholm" anzuführen. Dort wird eine zusammenschiebbarer Lenkholm offenbart. Dabei sind zwei Lenkholmteile teleskopartig ineinanderschiebbar bzw. auseinanderziehbar und können in beiden Grenzlagen durch einen Stift zueinander festgelegt werden. Es ist also nur einen ausgefahrene oder eine eingefahrene Position möglich. Diese Anpassungsmöglichkeit dient nur dazu, dass der Lenkholm beim Fahren mit einem Stützrad oder einem Anhänger vollständig abgenommen oder entsprechend eingefahren werden kann.

Schließlich ist noch die DE 10 2007 045 146 A1 "Einachsfahrzeug mit einer Plattform und/oder einem Sitz für einen Fahrer" zu nennen. Dort wird eine Steuersäule angeführt, welche längsverstellbar ist und an ihrem oberen Ende einen Handgriff, ähnlich einer Fahrradlenkerstange aufweist.

### Aufgabe der Erfindung

Die Aufgabe der vorliegenden Erfindung ist es, die Nachteile aus dem Stand der Technik zu überwinden. Insbesondere soll ein Lenkholm für Einachsschlepper bereitgestellt werden, welcher in seiner Länge an unterschiedliche Bedingungen, welche durch das Gelände und/oder eine bedienende Person bestimmt werden, anpassbar ist. Dabei soll eine bedienende Person auf dem Einachsschlepper mitfahren, hinterherlaufen oder gar nicht physisch mit dem Einachsschlepper in Verbindung stehen können.

### Lösung der Aufgabe

Zur Lösung der Aufgabe führen die Merkmale nach dem Anspruch 1.

Vorteilhafte Ausgestaltungen sind in den Unteransprüchen beschrieben.

Ein Einachsschlepper, welcher auch als Einachstraktor, Einachsmährer, Einachser oder Deichselreiter bezeichnet wird, ist eine landwirtschaftliche Maschine zur Boden- und Grünlandbearbeitung sowie für Transportzwecke oder Grundstücks- und Wegepflege. Ein Einachsschlepper hat zwei durch eine Achse verbundene Räder. Eine Bedienung erfolgt in der Regel über einen Lenkholm und einen Lenker von einer hinter dem Einachsschlepper hergehenden Person. Üblicherweise sind für Einachsschlepper Anbaugeräte wie Fräsen, Pflüge, Balkenmäher, Mulcher, Bandrechen, Kehrmaschinen, Schneefräse oder einachsige Anhänger vorgesehen, welche entweder gezogen oder geschoben werden können.

Bei einigen Einachsschleppern ist es möglich, dass eine bedienende Person beispielsweise mittels eines Trittbretts oder einer Sitzvorrichtung auf dem Einachsschlepper mitfahren kann und nicht zwingend oder ständig hinter dem Einachsschlepper hinterherlaufen muss. Ist eine solche Variabilität gegeben oder vorgesehen, entstehen unterschiedliche Ansprüche an den Lenkholm, welcher bei einer mitfahrenden Person für eine effektive Bedienung deutlich kürzer und in einem anderen, meist steileren Winken zum Einachsschlepper ausgerichtet sein muss, als wenn die bedienende Person hinter dem Einachsschlepper, welcher gegeben falls noch mit einem zu ziehenden Anbaugerät gekoppelt ist, hinterherläuft. Vorliegende Erfindung löst dieses Problem.

In typischen Ausführungsbeispielen zu vorliegender Erfindung ist ein teleskopierbarer Lenkholm für Einachsschlepper vorgesehen. Dieser telekopierbare Lenkholm besteht aus einem inneren Holm und einem äußeren Holm, wobei der innere Holm zu dem äußeren Holm stufenlos telekopierbar ist. Über eine Anschlagvorrichtung ist der inneren Holm mit dem äußeren Holm verbunden und es erfolgt eine Begrenzung der Teleskopierlänge. Über einen Klemmhebel werden der inneren Holm und der äußere Holm in einer gewünschten und stufenlos verstellbaren Position zueinander festgelegt.

Die Anschlagvorrichtung besteht im Wesentlichen aus zwei Elementen, einem Führungsgestänge und einer Anschlaghülse. Die Anschlagvorrichtung ist in paralleler Ausrichtung außerhalb, also an den jeweiligen Aussenseiten des inneren und des äußeren Holms angeordnet. Das Führungsgestänge ist stiftförmige ausgebildet und an einem Ende, welches in Richtung eines Lenkers ausgerichtet ist, fest mit dem inneren Holm verbunden. Das Führungsgestänge wird zudem beweglich von der Anschlaghülse umfasst, welche mit dem äußeren Holm fest verbunden ist. Das stiftförmige Führungsgestänge durchgreift dabei die Anschlaghülse beweglich, wobei das freiliegende Ende des Führungsgestänges durch einen Anschlagkopf am Ausfahren aus der Anschlaghülse in Richtung des Lenkers gehindert wird.

Die Anschlagvorrichtung erfüllt dadurch auf effektive Weise eine Begrenzung der zueinander teleskopierbaren Holme. Trifft das Ende des Führungsgestänges, welches in Richtung des Lenkers ausgerichtet und fest mit dem inneren Holm verbunden ist, auf die Anschlaghülse des äußeren Holms, so ist die Position erreicht, in der der innere Holm maximal in den äußeren Holm eingefahren ist. Trifft hingegen das gegenüberliegende Ende des stiftförmigen Führungsgestänges mit seinem Anschlagkopf, welches in Richtung des Einachsschleppers ausgerichtet ist, auf die gegenüberliegende Seite der Anschlaghülse, so ist die Position erreicht, in der der innere Holm maximal aus dem äußeren Holm ausgefahren ist. Der teleskopierbare Bereich, wird daher, neben der Länge der beiden ineinander angeordneten Holme, maßgeblich durch die Länge des Führungsgestänges bestimmt.

Weiterhin ermöglicht die Anschlagvorrichtung durch ihre Anordnung auf den Aussenseiten der beiden Holme, dass die Innenseiten der beiden Holme nicht blockiert werden, so dass dort Leitungen, wie beispielsweise Kabel, geführt werden können, welche eine Verbindung zwischen dem Lenker und einem Einachsschlepper herstellen.

Der äußere Holm und der in diesem teleskopierbar und verdrehsicher angeordnete innere Holm sind als sich ausschließlich längs ersteckende Profilrohre ausgebildet. Diese Profilrohre sind in typischen Ausführungsbeispielen als Zitronenprofile ausgebildet, durch welche auf einfache Weise sichergestellt wird, dass ein Verdrehen der Holme zueinander nicht möglich ist. Natürlich können auch andere geeignete Profile zu Anwendung kommen, solange diese ein Verdrehen des inneren zum äußeren Holms verhindern und eine sich in Längsrichtung erstreckende Teleskopierbarkeit erlauben.

Der innere Holm kann durch den von der Anschlagvorrichtung vorgegebenen teleskopierbaren Bereich zu dem äußeren Holm verschoben und an gewünschter Position reversibel festgelegt werden. Für diese reversible Festlegung ist ein Klemmhebel mit einem Klemmbolzen an dem äußeren Holm angeordnet. Über einen Gewindezylinder und eine Bohrung durchgreift der Klemmbolzen dabei den äußeren Holm und kann gegen den inneren Holm in gewünschter Position festlegt werden. Dabei wird der Klemmbolzen gegen den inneren Holm gedreht, so dass der innere Holm in seiner Position zum äußeren Holm reversibel festgelegt wird. Dabei ist eine stufenlose Positionierung des inneren zum äußeren Holm möglich.

Der innere Holm des teleskopierbaren Lenkholms weist ferner, an seinem von dem äußeren Holm abgewandten Ende, eine verstellbare Zahngelenkverbindung mit Spannhebel zur Aufnahme eines Lenkers auf. Die Zahngelenkverbindung ist rund ausgebildet. Diese Zahngelenkverbindung ermöglicht es einen Lenker in einem gewünschten Winkel mit dem Lenkholm zu verbinden und zu positionieren. In Verbindung mit dem Spannhebel ist eine flexible und schnelle Anpassung der Ausrichtung der Winkelstellung des Lenkers an die vorherrschende Geländesituation oder die Anforderungen einer bedienenden Person einfach, schnell und sicher möglich.

Der äußere Holm ist an der Seite, die von dem inneren Holm abgewandt ist und in Richtung des Einachsschleppers gerichtet ist, über eine Gelenkeinheit mit einem Kabelreservoir verbunden.

Die Gelenkeinheit nimmt einerseits den äußeren Holm auf und ist mit diesem fest verbunden und weist auf der gegenüberliegenden Seite ein verstellbares Zahndoppelgelenk auf, über welches die Gelenkeinheit mit dem Kabelreservoir verbunden ist.

Das verstellbare Zahndoppelgelenk verfügt über zwei parallel zueinander angeordnete kreisrunde Zahngelenke, über welche eine sichere und im Winkel verstellbare Verbindung mit dem Kabelreservoir des Einachsschleppers erfolgt. Das Zahndoppelgelenk weist ebenfalls einen Spannhebel auf, über welchen eine Ausrichtung des Winkels der Gelenkeinheit bzw. des Lenkholms zum Kabelreservoir bzw. dem Einachsschlepper festgelegt werden und je nach Wunsch und Anspruch in einer gewünschten Winkelstellung verstellt werden kann.

Innerhalb des äußeren Holms, der Gelenkeinheit und des Kabelreservoirs ist eine flexibel ausgebildete Leitungsführung angeordnet. Diese flexible Leitungsführung ist schlauchförmig und erfüllt die Aufgabe des Schutzes von in ihr verlaufenden Leitungen, wie beispielsweise Kabeln. Damit diese Leitungsführung immer in einer optimalen Lage verbleibt und insbesondre im Bereich der Gelenkeinheit nicht verklemmt, ist zwischen dem Zahndoppelgelenk und dem Übergang zum äußeren Holm eine erste Rampe angeordnet. Diese erste Rampe ist als flächiges und gebogenes rampenförmiges Element ausgebildet schützt die Leitungsführung in diesem häufig angewinkelten und im Winkel variablen Bereich.

Das Kabelreservoir stellt die Verbindung zwischen der Gelenkeinheit bzw. dem Lenkholm und dem Einachsschlepper dar. Dabei bildet das Kabelreservoir einen Aufnahmeraum in welchem Leitungen, wie beispielsweise Kabel die zwischen dem Lenker und der Einachsschlepper verlaufen, Platz finden. Dies ist insbesondere dann notwendig, wenn sich der Lenkholm in einer nicht vollständig ausgefahrenen Position, oder beispielsweise in der maximal eingefahrenen Position befindet. Ohne den Aufnahmeraum des Kabelreservoirs würden beim Ein- und Ausfahren des Lenkholms die Kabel bzw. Leitungen geknickt, gestaucht, verknotet oder auf eine andere Weise innerhalb des Lenkholms bzw. des inneren und äußeren Holms beschädigt. Zudem könnte es ohne diesen Aufnahmeraum zur Blockierung des Teleskopmechanismus in Verbindung mit den Leitungen bzw. Kabeln innerhalb des Lenkholms kommen.

Weiterhin weist der innere Holm eine Aufnahmeöffnung im Bereich der verstellbaren Zahngelenkverbindung auf. Die Aufnahmeöffnung ermöglicht die Aufnahme von Leitungen und Kabeln, welche vom Lenker zum Einachsschlepper verlaufen bzw. umgekehrt. Damit die Leitungen und Kabel auch beschädigungsfrei und ordnungsgemäß in die Aufnahmeöffnung aufgenommen werden und nicht ggf. eingeklemmt oder beschädigt werden, ist eine zweite Rampe derart in der Aufnahmeöffnung angeordnet, dass eine Führung der Kabel bzw. Leitungen erfolgt. Die zweite Rampe ist als flächiges und gebogenes rampenförmiges Element ausgebildet, welches einends auf einer Aussenseite des inneren Holms angeordnet ist und andernends durch die Aufnahmeöffnung bis zur gegenüberliegenden Innenseite des inneren Holms reicht. Eine optimale und störungsfreie Führung der Kabel bzw. Leitungen in diesem Bereich wird dadurch auf einfache und effektive Weise ermöglicht.

Weiterhin weist der äußere Holm an seiner Aussenseite mehrere Ansatzpunkte auf, an denen eine Abdeckung festgelegt werden kann. Die Abdeckung schützt insbesondere den äußeren Holm vor Beschädigung und Verunreinigungen.

### Figurenbeschreibung

Weitere Vorteile, Merkmale und Einzelheiten der Erfindung ergeben sich aus der nachfolgenden Beschreibung eines erfindungsgemässen Ausführungsbeispiels sowie anhand der Zeichnungen; diese zeigen in:
- Figur 1: eine Seitenansicht eines erfindungsgemässen teleskopierbaren Lenkholms A in einer maximal ausgefahrenen Position;
- Figur 2: eine Seitenansicht des erfindungsgemässen teleskopierbaren Lenkholms A in einer maximal eingefahrenen Position;
- Figur 3: eine geschnittene Ansicht nach Figur 1;
- Figur 4: eine geschnittene Ansicht nach Figur 2;
- Figur 5: eine geschnittene Ansicht des erfindungsgemässen teleskopierbaren Lenkholms A entlang der Schnittlinie S.

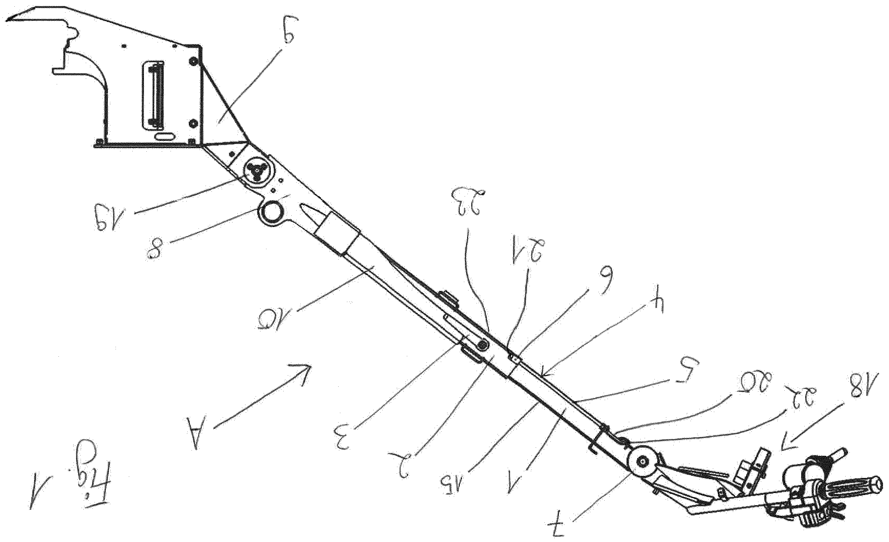

In Figur 1 ist eine Seitenansicht eines erfindungsgemässen teleskopierbaren Lenkholms A dargestellt. Dabei ist der teleskopierbare Lenkholm A in einer maximal ausgefahrenen Position gezeigt, wobei ein innerer Holm 1 maximal aus einem äußeren Holm 2 ausgefahren ist.

Der innere Holm 1 weist an der Seite, die nicht innerhalb des äußeren Holms 2 angeordnet ist, eine Zahngelenkverbindung 7 auf. Diese Zahngelenkverbindung 7 ist eine Aufnahme für einen Lenker 18, wobei die Zahngelenkverbindung 7 derart ausgebildet ist, dass der Lenker 18 in unterschiedlichen Winkelpositionen zum teleskopierbaren Lenkholm A auf einfache Weise festgelegt und auch wieder in seine Winkelpositionen verändert werden kann.

Dazu weist die Zahngelenkverbindung 7 einen Spannhebel auf, welcher in vorliegender Figur 1 nicht dargestellt ist.

Im Bereich des Endes des inneren Holms 1, welches mit dem Lenker 18 über die Zahngelenkverbindung 7 verbunden ist, ist eine Aufnahmeöffnung 20 angeordnet, welche eine Öffnung in dem Profil des inneren Holms 1 bildet. Die Aufnahmeöffnung 20 ermöglicht die Aufnahme von Leitungen und Kabeln, welche im Inneren des teleskopierbaren Lenkholms A vom Lenker 18 zum Einachsschlepper verlaufen bzw. umgekehrt. Damit die Leitungen und Kabel auch beschädigungsfrei und ordnungsgemäß in die Aufnahmeöffnung 20 aufgenommen werden und nicht ggf. eingeklemmt oder beschädigt werden, ist eine zweite Rampe 22 derart in der Aufnahmeöffnung 20 angeordnet, dass eine Führung der Kabel bzw. Leitungen problemlos erfolgt.

Die Teleskopierbarkeit des inneren Holms 1 zu dem äußeren Holm 2 wird durch eine Anschlagvorrichtung 4 axial in beide Richtungen, nämlich in Richtung eines Lenkers 18 bzw. in die gegenüberliegende Richtung zu einer Gelenkeinheit 8 hin, begrenzt.

Die Anschlagvorrichtung 4 besteht aus einem Führungsgestänge 5 und einer Anschlaghülse 6. Das Führungsgestänge 5 ist stiftförmig ausgebildet und einerseits fest mit einer Aussenseite 15 des inneren Holms 1 verbunden. Die Anschlaghülse 6 ist fest mit einer weiteren Aussenseite 23 des äußeren Holms 2 verbunden.

Das Führungsgestänge 5 ist beweglich von der Anschlaghülse 6 umfasst, wobei die Anschlaghülse 6 von dem Führungsgestänge 5 durchgriffen wird und an seinem freien Ende, welches in Richtung der Gelenkeinheit 8 gerichtet ist, mit einem Anschlagkopf 21 versehen ist. Der Anschlagkopf 21 verhindert das Ausfahren des Führungsgestänges 5 aus der Anschlaghülse 6 in Richtung des Lenkers 18 und begrenzt so die maximale Teleskopierbarkeit des inneren Holms 1 zu dem äußeren Holm 2.

In Figur 1 ist die Position des teleskopierbaren Lenkholms A dargestellt, in der der innere Holm 1 maximal aus dem äußeren Holm 2 ausgefahren ist, wobei der Anschlagkopf 21 des Führungsgestänges 5 an der Anschlaghülse 6 anliegt und ein Ausfahren aus dieser verhindert.

Weiterhin ist in Figur 1 an dem äußeren Holm 2 ein Klemmhebel 3 angeordnet. Dieser Klemmhebel 3 dient zum stufenlosen und reversiblen Festlegen des inneren Holms 1 zum äußeren Holm 2. Zudem ist auf der weiteren Aussenseite 23 des äußeren Holms 2 ein Abdeckung 10 angeordnet, welche geschwungen und halbschalenähnlich um die von einem nicht dargestellten Boden abgewandten Seite des äußeren Holms 2 angeordnet ist.

An der von dem inneren Holm 1 abgewandten Seite geht der äußere Holm 2 in die Gelenkeinheit 8 über. Die Gelenkeinheit 8 weist ein Zahndoppelgelenk 19 auf, über welches es mit einem Kabelreservoir 9 verbunden ist. Über das Zahndoppelgelenk 19 wird, in Verbindung mit einem nicht dargestellten Spannhebel, eine Winkellage des teleskopierbaren Lenkholms A zu dem Kabelreservoir 9 bzw. dem sich daran anschließenden Einachsschlepper, welcher ebenfalls nicht dargestellt ist, gewählt, nach Wunsch festgelegt und auch wieder verändert.

An die Gelenkeinheit 8 schließt sich das Kabelreservoir 9 an. Das Kabelreservoir 9 bildet einen Aufnahmeraum, welcher zur Aufnahme und vorrübergehenden Lagerung von Leitungen und Kabeln dient, insbesondre dann, wenn der teleskopierbare Lenkholm A sich in einer nahezu vollständig oder maximal eingefahren Position befindet.

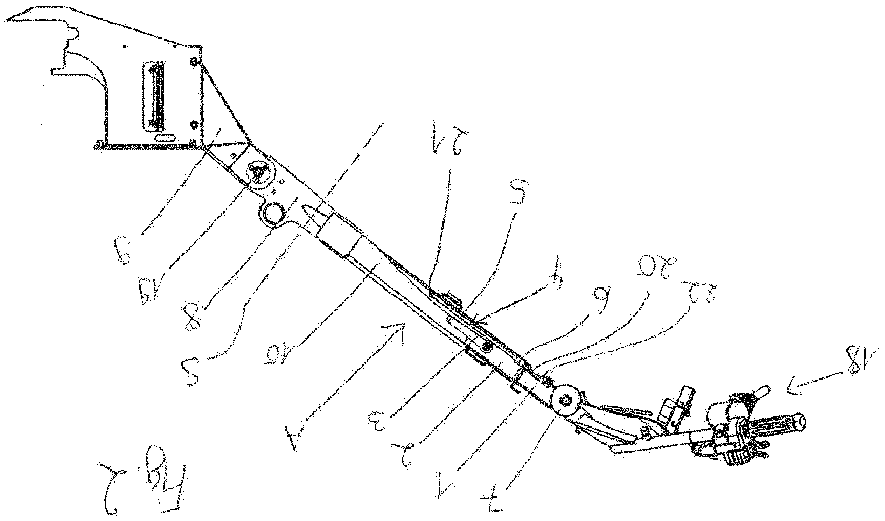

In Figur 2 ist eine Seitenansicht des erfindungsgemässen teleskopierbaren Lenkholms A dargestellt. Dabei ist der teleskopierbare Lenkholm A in einer maximal eingefahrenen Position gezeigt, wobei der innerer Holm 1 maximal in den äußeren Holm 2 eingefahren ist. In Figur 2 ist die Position des teleskopierbaren Lenkholms A dargestellt, in der der innere Holm 1 maximal in dem äußeren Holm 2 eingefahren ist, dabei liegt in dieser Position das Ende des Führungsgestänges 5 der Anschlagvorrichtung 4, welches fest mit dem inneren Holm 1 verbunden ist, an der Anschlaghülse 6 an, welche ihrerseits fest mit der äußeren Holm 2 verbunden ist. Ein weiteres Einfahren des inneren Holms 1 in den äußeren Holm 2 wird dadurch blockiert bzw. begrenzt. Alle weiteren abgebildeten Details der Figur 2 ergeben sich aus der Beschreibung zu Figur 1 und können entsprechend übertragen werden.

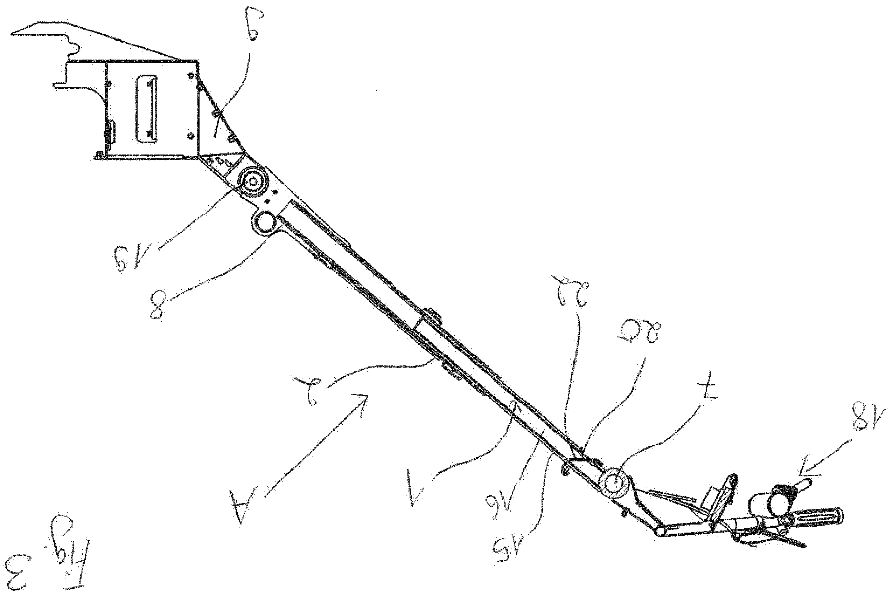

In Figur 3 ist eine in Längsrichtung geschnittene Seitenansicht des erfindungsgemässen teleskopierbaren Lenkholms A in einer maximal ausgefahrenen Position gezeigt, wobei der innere Holm 1 maximal aus dem äußeren Holm 2 ausgefahren ist. Hier ist der Blick in das Innere des teleskopierbaren Lenkholms A freigegeben, wobei insbesondere die Aufnahmeöffnung 20 des inneren Holms 1 mit der zweiten Rampe 22 gut ersichtlich sind. Die zweite Rampe 22 ist an der Aussenseite 15 des inneren Holms 1 angeordnet und reicht durch die Aufnahmeöffnung 20 bis an eine gegenüberliegende Innenseite 16 des inneren Holms 1. Alle weiteren abgebildeten Details der Figur 3 ergeben sich aus den Beschreibungen zu den Figuren 1 und 2 und können entsprechend übertragen werden.

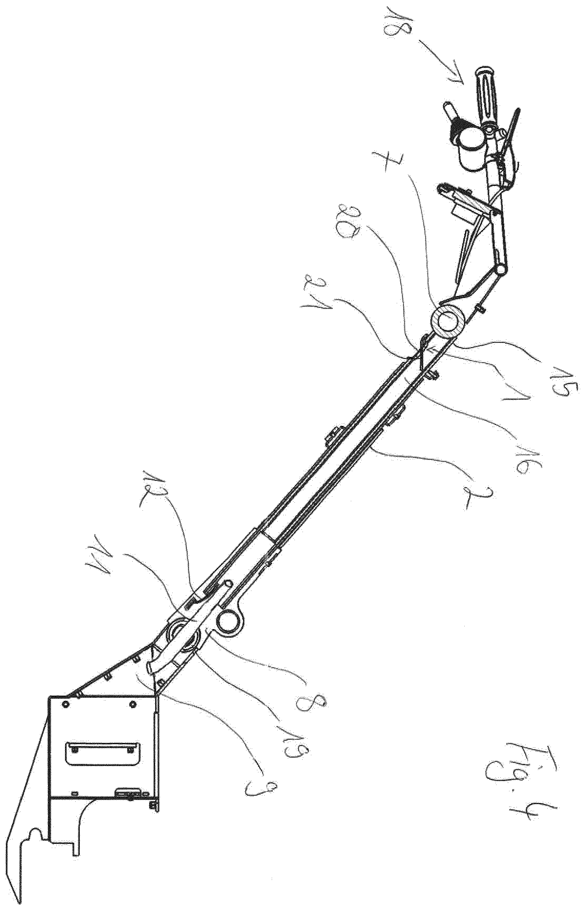

In Figur 4 ist eine in Längsrichtung geschnittene Seitenansicht des erfindungsgemässen teleskopierbaren Lenkholms A in einer maximal eingefahrenen Position gezeigt, wobei der innere Holm 1 maximal in den äußeren Holm 2 eingefahren ist. Hier ist der Blick in das Innere des teleskopierbaren Lenkholms A freigegeben, wobei insbesondere eine Leitungsführung 11 im inneren Bereich der Gelenkeinheit 8 ersichtlich ist. Die Leitungsführung 11 ist schlauchförmig ausgebildet und reicht einerseits wenige Zentimeter, vorzugsweise fünf bis 20 Zentimeter in das Innere des äußeren Holms 2 hinein und andererseits, wenige Zentimeter, vorzugsweise zwei bis fünfzehn Zentimeter in das Kabelreservoir 9 hinein. Die Leitungsführung 11 dient der Führung von Kabeln und Leitungen in dem von ihr überbrückten Bereich zwischen dem äußeren Holm 2 und dem Kabelreservoir 9. Damit die Leitungsführung 11 auch bei einer Veränderung des Winkels des teleskopierbaren Lenkholms A zum Kabelreservoir 9 nicht beeinträchtigt wird, ist in der Gelenkeinheit 8 eine erste Rampe 12 angeordnet. Diese erste Rampe 12 ist als flächiges und gebogenes rampenförmiges Element ausgebildet und schützt die Leitungsführung 11 im Übergang zu dem äußeren Holm 2. Alle weiteren abgebildeten Details der Figur 4 ergeben sich aus den Beschreibungen zu den Figuren 1, 2 und 3 und können entsprechend übertragen werden.

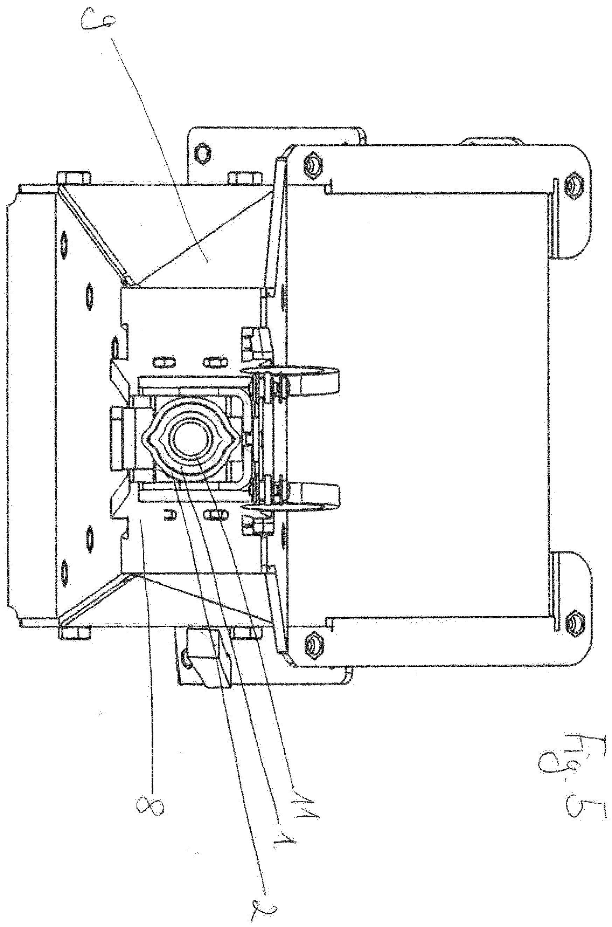

In Figur 5 ist eine geschnittene Ansicht des erfindungsgemässen teleskopierbaren Lenkholms A entlang einer Schnittlinie S aus der Figur 2 ersichtlich. In dieser Ansicht ist das Querprofil der teleskopierbaren Lenkholms A mit dem inneren Holm 1, welcher in dem äußeren Holm 2 angeordnet ist, gut ersichtlich. Weiterhin ist das Zitronenprofil des inneren Holms 1 und das Zitronenprofil des äußeren Holms 2 ersichtlich. Die Zitronenprofile beider ineinander angeordneter Holme 1 und 2 erlaub die Teleskopierbarkeit, wobei gleichzeitig eine Verdrehsicherheit gewährleistet ist. Weiterhin ist die Leitungsführung 11 im Querschnitt ersichtlich. Zudem sind die Gelenkeinheit 8 und das Kabelreservoir 9 dargestellt.

Bezugnehmend auf die Figuren 1 bis 5 erklärt sich die Funktionsweise der erfindungsgemässen Vorrichtung folgendermassen:
Der erfindungsgemässe teleskopierbare Lenkholm A erlaubt zahlreiche Anpassungsmöglichkeiten, wobei die Winkelstellung des Lenkers 18 zum teleskopierbaren Lenkholm A über die Zahngelenkverbindung 7 beliebig eingestellt werden kann, wobei die Winkelstellung des teleskopierbaren Lenkholms A über das Zahndoppelgelenk 19 zum Kabelreservoir 9 bzw. einem Einachsschlepper eingestellt werden kann und wobei eine Länge des teleskopierbaren Lenkholms A durch stufenloses Ein- und Ausfahren des inneren Holms 1 zu dem äußeren Holm 2 und eine Festlegung in gewünschter Position über den Klemmhebel 3 möglich ist.

Die die Teleskopierbarkeit des teleskopierbaren Lenkholms A wird durch die Anschlagvorrichtung 4 in beide Richtungen begrenzt. Wird der teleskopierbare Lenkholm A von einer ganz oder teilweise ausgefahrenen Position in eine vollständig oder nahezu eingefahrene Position verstellt, wird der zuvor für die vollständige Erstreckung benötigte Teil der Leitungen und Kabeln im Kabelreservoir 9 gelagert.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen. Die Erfindung ist ausschließlich durch die beigefügten Ansprüche definiert.

Insbesondere können sowohl die Zahngelenkverbindung 7 als auch das Zahndoppelgelenk 19 in ihren Ausformungen veränderlich sein. Wesentlich ist jedoch, dass jeweils Verbindungen vorliegen, welche zu dem teleskopierbaren Lenkholm A eine veränderliche bzw. anpassbare Winkelstellung erlauben. Weiterhin können neben dem Zitronenprofil, welches bei dem inneren Holm 1 und dem äußeren Holm 2 ein Verdrehen zueinander verhindert, auch andere Profile zum Einsatz kommen, solange diese verdrehsicher sind und dennoch die Teleskopierbarkeit erlauben.

### Bezugszeichenliste

| | |
|---|---|
| 1 | innerer Holm |
| 2 | äußerer Holm |
| 3 | Klemmhebel |
| 4 | Anschlagvorrichtung |
| 5 | Führungsgestänge |
| 6 | Anschlaghülse |
| 7 | Zahngelenkverbindung |
| 8 | Gelenkeinheit |
| 9 | Kabelreservoir |
| 10 | Abdeckung |
| 11 | Leitungsführung |
| 12 | erste Rampe |
| 13 | Klemmbolzen |
| 14 | Bohrung |
| 15 | Aussenseite |
| 16 | Innenseite |
| 17 | Gewindezylinder |
| 18 | Lenker |
| 19 | Zahndoppelgelenk |
| 20 | Aufnahmeöffnung |
| 21 | Anschlagkopf |
| 22 | zweite Rampe |
| 23 | weitere Aussenseite |
| 24 | |
| 25 | |
| 26 | |
| 27 | |
| 28 | |
| 29 | |
| A | teleskopierbarer Lenkholm |
| S | Schnittlinie |

## Patentansprüche

1. Teleskopierbarer Lenkholm für Einachsschlepper mit einem inneren Holm (1) und einem äußeren Holm (2) sowie einem Klemmhebel (3), wobei der innere Holm (1) und der äußere Holm (2) stufenlos telekopierbar über eine Anschlagvorrichtung (4) verbunden sind,
**dadurch gekennzeichnet,**
**dass** der äußere Holm (2) an seinem von dem inneren Holm (1) abgewandten Ende über eine Gelenkeinheit (8) mit einem Kabelreservoir (9) verbunden ist, wobei innerhalb des äußeren Holms (2), der Gelenkeinheit (8) und des Kabelreservoirs (9) eine flexibel ausgebildete Leitungsführung (11) verläuft.

2. Teleskopierbarer Lenkholm nach Anspruch 1, **dadurch gekennzeichnet, dass** die Leitungsführung (11) von der Gelenkeinheit (8) über eine erste Rampe (12) in eine Innenseite (16) des äußeren Holms (2) geführt ist.

## Claims

1. Telescopic steering bar for single-axle tractor, comprising an inner bar (1), an outer bar (2), and a clamping lever (3), wherein the inner bar (1) and the outer bar (2) are continuously telescopically connected to one another via a stop device (4),
**characterized in that**
the outer bar (2) is connected at its end facing away from the inner bar (1) to a cable reservoir (9) via a joint unit (8), wherein a flexibly designed cable guide (11) extends inside the outer bar (2), the joint unit (8), and the cable reservoir (9).

2. Telescopic steering bar according to claim 1, **characterized in that** the cable guide (11) is guided from the joint unit (8) via a first ramp (12) into an inner side (16) of the outer bar (2).

## Revendications

1. Mancheron télescopique pour motoculteur, comprenant une barre intérieure (1) et une barre extérieure (2) ainsi qu'un levier de serrage (3), la barre intérieure (1) et la barre extérieure (2) étant reliées de manière télescopique en continu par l'intermédiaire d'un dispositif de butée (4),
**caractérisé en ce que**
la barre extérieure (2), à son extrémité détournée de la barre intérieure (1), est reliée à un réservoir de câble (9) par l'intermédiaire d'une unité d'articulation (8), et
un guide-câble flexible (11) s'étend à l'intérieur de la barre extérieure (2), de l'unité d'articulation (8) et du réservoir de câble (9).

2. Mancheron télescopique selon la revendication 1,
**caractérisé en ce que** le guide-câble (11) est mené depuis l'unité d'articulation (8) via une première rampe (12) jusque dans un côté intérieur (16) de la barre extérieure (2).
